# EUROPEAN PATENT SPECIFICATION

(11) **EP 3 366 457 B1**
(45) Date of publication and mention of the grant of the patent: **13.04.2022**
(21) Application number: 18152489.3
(22) Date of filing: 19.01.2018
(51) Int. Cl.: B29C 64/35, B29C 64/218, B33Y 30/00, B33Y 40/00

(54) **THREE-DIMENSIONAL OBJECT SHAPING DEVICE**
VORRICHTUNG ZUR FORMUNG DREIDIMENSIONALER GEGENSTÄNDE
DISPOSITIF DE MISE EN FORME D'OBJET TRIDIMENSIONNEL

(30) Priority: 31.01.2017 JP 2017015316
(43) Date of publication of application: 29.08.2018
(73) Proprietor: Mimaki Engineering Co., Ltd., Tomi-City, Nagano 389-0512 (JP)
(72) Inventor: HAKKAKU, Kunio, Tomi-city, Nagano 389-0512 (JP); KAWAI, Tomoya, Tomi-city, Nagano 389-0512 (JP)
(74) Representative: Horn Kleimann Waitzhofer Patentanwälte PartG mbB

(56) References cited:
- EP-A1- 2 572 864
- EP-A2- 1 674 243
- WO-A1-2017/009831
- US-A1- 2007 063 366
- US-A1- 2010 121 476
- US-A1- 2010 140 852
- US-A1- 2014 036 455

## Description

### TECHNICAL FIELD

The present disclosure relates to a technique that shapes a three-dimensional object using a layer shaping method.

### DESCRIPTION OF THE BACKGROUND ART

In recent years, a 3D printer configured to shape a three-dimensional object having a three-dimensional profile is used for various purposes. The 3D printer ejects ultraviolet curing ink (shaping material) from an ink jet head that scans in two-dimensional directions, and generates a layer by irradiating ultraviolet light to the ejected ink. Layers are sequentially formed by repeating this operation to form a desired three-dimensional object.

A three-dimensional shaping device described in Japanese Unexamined Patent Application Publication No. 2013-67119 is provided with a roller section for scraping off extras of shaping material ejected from an ink jet head. The shaping material is ejected in excess, and extras thereof are scraped off to accurately control heights of respective layers.

The roller section described in Japanese Unexamined Patent Application Publication No. 2013-67119 includes a roller body, which is a rotatable body, a blade arranged to protrude with respect to a surface of the roller body, a bath for collecting the shaping material scraped off by the blade, and a suction pipe that ejects the shaping material collected in the bath (paragraph [0044] and FIG. 7 of Japanese Patent Application Laid-Open No. 2013-67119). According to this configuration, the shaping material ejected in excess is adhered to the roller section, the shaping material adhered to the roller section is scraped off by the blade, and the shaping material collected in the bath is sucked.

US 2007/0063366 A1 discloses a by-product waste material removal system for solid deposition modeling. As excess build and support material is removed during the build as a by-product waste the removal system collects the by-product waste material into a waste receptacle for disposal. The by-product waste material removal system requires no mechanical systems.

EP 2 572 864 A1 discloses a roller portion configured to scrape off an excess portion of the model material and the supporting material. A curing device is configured to cure the model material and the supporting material. A head portion includes the shaping-material ejection device, the roller portion, and the curing device. A horizontal driving device executes a reciprocating scan in a horizontal direction with the head portion. A vertical driving device displaces the head portion and the shaping plate relative to each other in the height direction. A control device is configured to control ejection of the shaping material by the shaping-material ejection device and curing by the curing device. The width of the roller portion is less than the width of the model-material ejection nozzle and the supporting-material ejection nozzle.

### SUMMARY

As described above, the roller section removes extra shaping material from a layered surface by adhering the shaping material on the surface of the roller body, however, the shaping material that has once been removed must not adhere again onto the layered surface by rotation of the roller body. When the extra shaping material adheres again on the layered surface from the roller section, undesirable effects such as colors being mixed and the like may occur.

The present disclosure aims to provide a three-dimensional object shaping device with increased performance to scrape off a shaping material adhered to a roller body.

A three-dimensional object shaping device of the present disclosure is a device configured to shape a three-dimensional object using a layer shaping method, the device including: an ejection head configured to eject a shaping material; a flattening roller configured to rotate and move over the shaping material ejected on a layered surface to remove an extra shaping material; a plate-shaped member configured to make contact with the flattening roller along a circumferential surface of the flattening roller to scrape off the shaping material adhered to the circumferential surface by rotation of the flattening roller, wherein chrome plating is coated on the surface of the flattening roller, and the plate-shaped member is made of carbon tool steel; and a blade unit is provided that comprises the plate-shaped member, and a reservoir configured to temporarily collect the shaping material scraped off by the plate-shaped member, wherein the plate-shaped member is arranged in a position with respect to the flattening roller by installing the reservoir of the blade unit in the device.

With a configuration that combines the flattening roller having the chrome plating coating on its surface and the plate-shaped member made of carbon tool steel, performance to scrape off the shaping material adhered to the flattening roller can be increased. Further, the flattening roller having the chrome plating coating has a high durability with respect to the plate-shaped member made of carbon tool steel, and high scraping performance can be maintained over a long period of time.

A three-dimensional object shaping device as another aspect of the present disclosure is a device configured to shape a three-dimensional object using a layer shaping method, the device including: an ejection head configured to eject a shaping material; a flattening roller configured to rotate and move over the shaping material ejected on a layered surface to remove an extra shaping material; a plate-shaped member configured to make contact with the flattening roller along a circumferential surface of the flattening roller to scrape off the shaping material adhered to the circumferential surface by rotation of the flattening roller, wherein chrome plating is coated on the surface of the flattening roller, and the plate-shaped member is made of resin; and a blade unit is provided that comprises the plate-shaped member, and a reservoir configured to temporarily collect the shaping material scraped off by the plate-shaped member, wherein the plate-shaped member is arranged in a position with respect to the flattening roller by installing the reservoir of the blade unit in the device.

With a configuration that combines the flattening roller having the chrome plating coating on its surface and the plate-shaped member made of resin, the performance to scrape off the shaping material adhered to the flattening roller can be increased. Further, the flattening roller having the chrome plating coating has the high durability, and the high scraping performance can be maintained over a long period of time without an occurrence of damages to its roller surface. Moreover, the plate-shaped member made of resin has a characteristic of being resistant to becoming wet by repelling off the shaping material, so an effect of allowing the shaping material to flow smoothly can be achieved.

In the three-dimensional object shaping device of the present disclosure, the flattening roller may have the chrome plating coating on a surface of a stainless steel base material. By using the flattening roller made of the stainless steel base material as above, portions that are not coated by the chrome plating are also resistant to rusting.

In the three-dimensional object shaping device of the present disclosure, a thickness of the chrome plating may be 20µm to 40µm. When the thickness of the chrome plating is thin, it is difficult to maintain the coating at a constant thickness, and when the thickness of the chrome plating is thick, a manufacturing process therefor becomes longer and cost is incurred thereby. By setting the thickness of the chrome plating to be 20µm to 40µm, the chrome plating coating having a constant thickness can be configured with reasonable cost.

In the three-dimensional object shaping device of the present disclosure, a surface roughness of the chrome plating may be Ra ≤ 1 µm. According to this configuration, contact performance between the circumferential surface of the flattening roller and the plate-shaped member becomes high, and the performance of the plate-shaped member to scrape off the shaping material can be increased.

In the three-dimensional object shaping device of the present disclosure, the plate-shaped member may be configured to protrude outward from the flattening roller in a rotation axis direction of the flattening roller. According to this configuration, the shaping material can be prevented from easily dripping from side surfaces of the flattening roller.

In the three-dimensional object shaping device of the present disclosure, the blade unit may further include a suction pipe configured to suck the shaping material from the reservoir for temporarily collecting the shaping material scraped off by the plate-shaped member, and a filter provided at a suction inlet of the suction pipe. According to this configuration, hardened particles of the shaping material and dust can be prevented from entering the suction pipe, and the suction pipe becomes more resistant against clogging.

According to the configuration of the present disclosure, performance to scrape off a shaping material adhered to a flattening roller can be increased.

### BRIEF DESCRIPTION OF THE DRAWINGS

FIG. 1 is a schematic diagram of a three-dimensional object shaping device of a present embodiment.
FIG. 2 is a perspective diagram illustrating an example of a three-dimensional object to be shaped by the three-dimensional object shaping device.
FIG. 3 is a diagram illustrating details of a flattening roller unit.
FIG. 4 is a perspective diagram illustrating a configuration of the flattening roller unit.
FIG. 5 is a diagram illustrating a configuration of a suction device.
FIG. 6A is a diagram illustrating an example of a filter attached to a suction pipe, and FIG. 6B is a diagram illustrating another example of the filter attached to the suction pipe.

### DETAILED DESCRIPTION OF EMBODIMENTS

Hereinbelow, embodiments of a three-dimensional object shaping device of the present disclosure will be described with reference to the drawings.

### (First Embodiment)

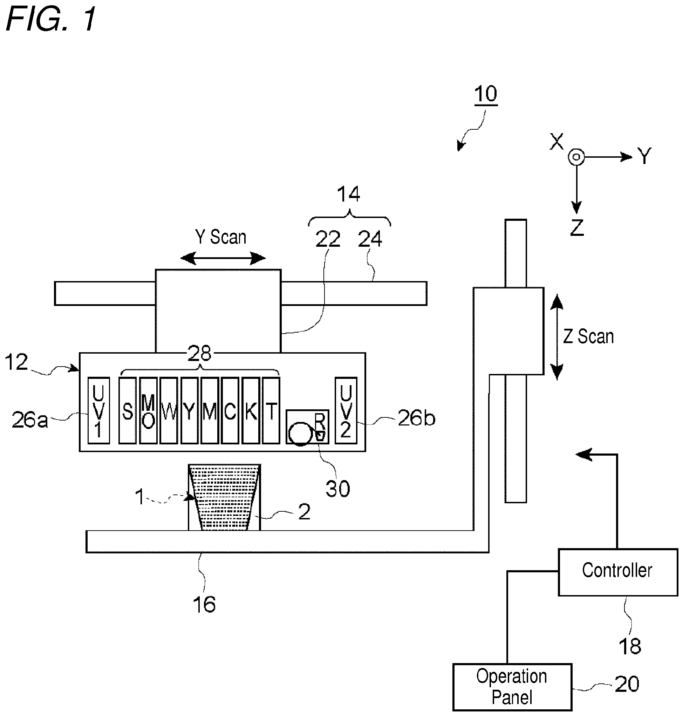

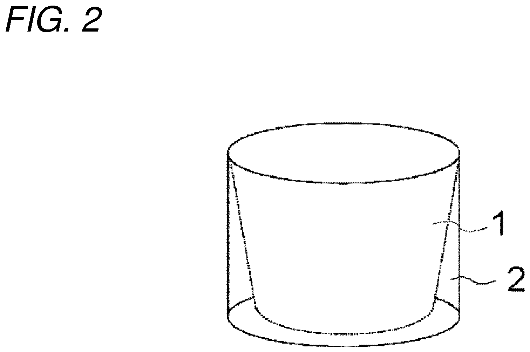

FIG. 1 is a schematic diagram of a three-dimensional object shaping device 10 of the present embodiment. FIG. 2 is a perspective diagram illustrating an example of a three-dimensional object 1 to be shaped by the three-dimensional object shaping device 10 illustrated in FIG. 1. The three-dimensional object shaping device 10 illustrated in FIG. 1 is configured to shape for example the three-dimensional object 1 by using a layer shaping method that performs shaping by layering plural layers.

The three-dimensional object shaping device 10 of the present embodiment is provided with an ejection unit 12, a main scan actuator 14 for performing a main scanning operation (Y direction), a shaping stage 16 which is a mounting stage for mounting the three-dimensional object 1, a controller 18, and an operation panel 20. The ejection unit 12 is a section configured to eject ink, which is a material of the three-dimensional object 1. In this embodiment, ultraviolet curing ink that cures by ultraviolet light irradiation is used as the shaping material of the three-dimensional object 1.

The ejection unit 12 includes ejection heads 28 configured to eject the ink being the shaping material, a flattening roller unit 30 configured to flatten the ink ejected from the ejection heads 28, and ultraviolet light sources 26a, 26b configured to cure the ink. Although not illustrated, the three-dimensional object shaping device 10 is provided with a sub scanning actuator configured to cause the ejection unit 12 to perform a sub scanning operation (X direction) which intersects perpendicularly with a main scanning direction (Y direction).

The ejection heads 28 includes a plurality of color ink heads (Y, M, C, K), a white ink head (W), a transparent ink head (T), a shaping material head (MO), a support material head (S), and the plurality of ultraviolet light sources 26a, 26b. The color ink heads (Y, M, C, K), the white ink head (W), the transparent ink head (T), and the shaping material head (MO) are arranged to align along the main scanning direction (Y direction) with their positions in the sub scanning operation (X direction) matched with each other.

The shaping material head (MO) is an ink jet head configured to eject ink droplets of the fluid ultraviolet curing ink used as the shaping material for forming the three-dimensional object 1. The support material head (S) is an ink jet head configured to eject ink droplets containing a material of a support 2. As illustrated in FIG. 2, in a case where the three-dimensional object 1 becomes larger towards its upper side, an area to be newly layered on an already-layered surface is larger, so a so-called "overhanging" state in which the ink cannot be layered on the already-layered surface is generated. The support 2 is for supporting the three-dimensional object 1 at such an overhanging portion. The support 2 is removed by being resolved with water and the like when shaping of the three-dimensional object 1 is completed.

The plurality of ultraviolet light sources 26a, 26b are ultraviolet light sources for curing the ultraviolet curing ink, and ultraviolet LEDs (Light Emitting Diodes), metal halide lamps, mercury lamps, and the like are used, for example. The plurality of ultraviolet light sources 26a, 26b are arranged at both end sides of the ejection unit 12.

The main scan actuator 14 is an actuator for causing the ejection unit 12 to perform the main scanning operation. The main scanning operation is an operation to eject the ink droplets while moving in the preset main scanning direction (Y direction in the drawings). The main scan actuator 14 includes a carriage 22 and a guide rail 24. The guide rail 24 is a rail member configured to guide movements of the carriage 22, and moves the carriage 22 according to instructions from the controller 18 during the main scanning operation.

The carriage 22 is a retainer that retains the ejection unit 12 by facing it to the shaping stage 16. That is, the carriage 22 retains the ejection unit 12 so that an ejecting direction of the ink droplets ejected from the ejection unit 12 is along a direction toward the shaping stage 16.

It should be noted that, the movement of the ejection unit 12 during the main scanning operation may be a relative movement with respect to the three-dimensional object 1. Due to this, in a modified example of a configuration of the three-dimensional object shaping device 10, for example, a three-dimensional object 1 side may be moved by fixing a position of the ejection unit 12 and moving the shaping stage 16.

The shaping stage 16 is the mounting stage for mounting the three-dimensional object 1 being shaped on a top surface thereof. This shaping stage 16 has a function of moving its top surface in an up and down direction (Z direction in the drawings), and is configured to move the top surface according to instructions from the controller 18 along progress of the shaping of the three-dimensional object 1. Due to this, a distance (gap) between a shaped surface of the three-dimensional object 1 being shaped and the ejection unit 12 is suitably adjusted. It should be noted that, scan along the Z direction for moving the shaping stage 16 up and down with respect to the ejection unit 12 may be facilitated by moving an ejection unit 12 side in the Z direction.

The controller 18 is a module configured to control respective sections of the three-dimensional object shaping device 10, and it includes a CPU (Central Processing Unit) which functions as a controller for executing various processes, a RAM (Random Access Memory) and a ROM (Read Only Memory) and the like which function as a memory for storing various types of information. The controller 18 controls operations for shaping the three-dimensional object 1 by controlling the respective sections of the three-dimensional object shaping device 10 based on profile information, color image information, and the like of the three-dimensional object 1 to be shaped.

The operation panel 20 provides a user interface for an operator, and has functions of displaying states of the three-dimensional object shaping device 10 and receiving inputs of instructions from the operator.

### (Configuration of Flattening Roller Unit)

The flattening roller unit 30 flattens layers of ultraviolet curing ink formed during the shaping of the three-dimensional object 1. The flattening roller unit 30 is arranged between the transparent ink head (T) and the ultraviolet light source 26b.

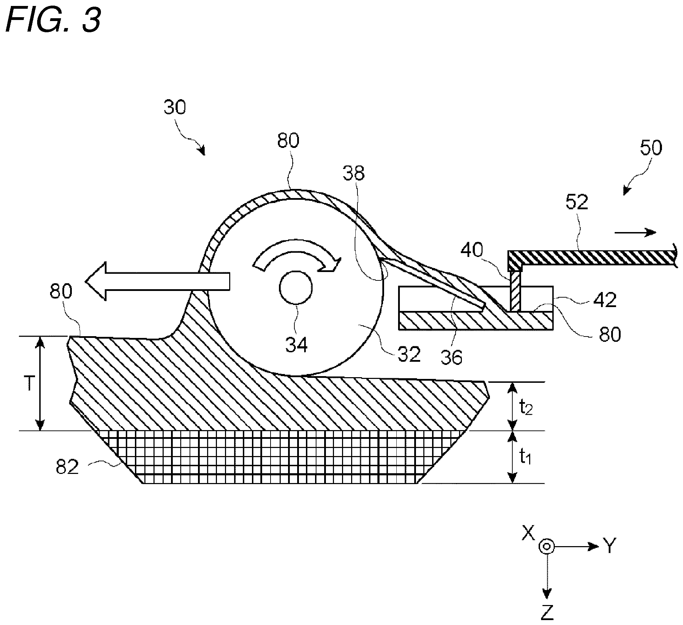

FIG. 3 is a diagram illustrating details of the flattening roller unit 30 illustrated in FIG. 1. The flattening roller unit 30 includes a round column-like flattening roller 32 configured to remove an extra shaping material 80, a rotation shaft 34 configured to rotatably support the flattening roller 32, a blade 36 configured to scrape off the shaping material 80 adhered to a surface of the flattening roller 32, a reservoir 42 configured to temporarily collect the shaping material 80 scraped off by the blade 36, and a suction pipe 40 configured to suck the shaping material 80 in the reservoir 42. The suction pipe 40 is a straight pipe with no bending process performed thereon so that the shaping material 80 will not be clogged therein. The suction pipe 40 is made for example of SUS 304. The suction pipe 40 is connected to a suction device 50.

The flattening roller 32 has a stainless steel main body, and has chrome plating coated on its surface. The flattening roller having chrome plating coating has a high Vickers hardness Hv of 750 to 1,000, and as such, its durability against wear is high, and high scraping performance can be maintained over a long period of time without causing damages to its roller surface. A thickness of the chrome plating coating is 20 µm to 40 µm, and its surface roughness is Ra ≤ 1µm.

The flattening roller 32 scrapes off an extra portion of the flowable shaping material 80 corresponding to (T-t2) so that a thickness t2 of the flowable shaping material 80 becomes same thickness as a thickness t1 of a shaping material 82 of which curing is completed by the ultraviolet light irradiation. Due to this, a top surface of the shaping material 80 ejected onto the cured shaping material 82 becomes flat, and layer thicknesses can be controlled.

An operation condition of the flattening roller unit 30 will be described. A circumferential speed Vr of the flattening roller 32 is equal to or more than a scan speed Vy of the ejection unit 12 provided with the flattening roller unit 30. An upper limit value of the circumferential speed Vr is within a range by which a shaping material 80 adhered to the flattening roller 32 does not fly off by centrifugal force from rotation of the flattening roller 32. When the rotation of the flattening roller 32 is slow and the extra shaping material 80 is thereby dragged, shaping materials 80 of different colors may be mixed, which causes "color blurring", and as such, when the flattening roller unit 30 is to remove the extra shaping material 80, it is preferable to swiftly wind up the shaping material 80 adhered to the flattening roller 32. A number of revolution of the flattening roller 32 is preferably set to a value close to the upper limit by which the shaping material 80 adhered to the flattening roller 32 does not fly off by the centrifugal force from the rotation. It should be noted that a contact angle of the used ink with respect to a chrome plating surface of the flattening roller 32 is 20° to 45° after 300 msec from when an ink droplet has struck the surface, and this indicated sufficient wettability.

It is preferable that the range of the circumferential speed Vr by which the shaping material 80 does not fly off by the centrifugal force is suitably set based on parameters such as viscosity of the shaping material 80, the wettability of the surface of the flattening roller 32, a diameter of the flattening roller 32, rotation angular velocity, and the like. In this embodiment, the rotation angular velocity is set to 400 to 750 rpm under a condition in which the contact angle exhibiting the wettability of the surface of the flattening roller 32 is 30 to 50 degrees, and the diameter of the flattening roller 32 is 20 mm. Since a scraping thickness (T-t2) by the flattening roller is around 10 µm, deflection of the flattening roller 32 in a radial direction during the rotation is equal to or less than 5 µm, and more preferably equal to or less than 3 µm from the viewpoint of uniformity.

The blade 36 is a plate-shaped member made of carbon tool steel. The blade 36 includes a scraper portion 38 at one end of the blade 36 in the main scanning direction to scrape off the shaping material 80 adhered to the flattening roller 32 using the scraper portion 38, and this scraper portion has a tip end with an angle of 20 to 40 degrees with respect to a tangential line in a circumferential direction of the flattening roller 32. A thickness of the blade 36 is 0.1 to 0.15 mm.

Carbon tool steel, which is a material of the blade 36, has a lower hardness than the chrome plating coated on the surface of the flattening roller 32 so that it does not damage the surface of the flattening roller 32, and its Vickers hardness Hv is 150 to 300. Due to this, the blade 36 needs to be replaced, since it wears out after using it for a certain period (for example, two to three months). Upon this replacement, it is not easy to set the blade 36 by positioning it with respect to the flattening roller 32, and it is also dangerous since the blade 36 has a sharp blade tip. Thus, in the present embodiment, a blade unit may be configured by combining the reservoir 42 and the blade 36 that is fixed by being positioned with respect to the reservoir 42, and the suction pipe 40. By unitizing the blade 36 with the reservoir 42, replacement work can be performed by grasping the reservoir 42, and the blade 36 becomes easily put in position against the flattening roller 32 due to installing the reservoir 42 in the three-dimensional object shaping device. Therefore, the replacement work of the blade 36 can be performed safely and efficiently.

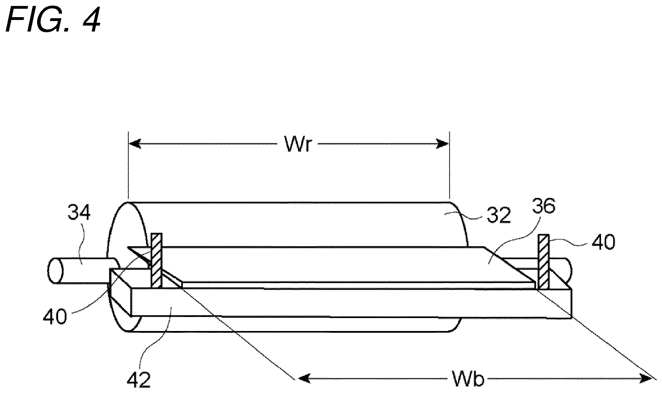

FIG. 4 is a perspective diagram illustrating the configuration of the flattening roller unit 30. As illustrated in FIG. 4, a width Wb of the blade 36 in the rotation axis direction of the flattening roller 32 is greater than a width Wr of the flattening roller 32, and both ends of the blade 36 protrude outward than the side surfaces of the flattening roller 32. Due to this, the shaping material 80 is configured less prone to dripping off from both ends of the flattening roller 32.

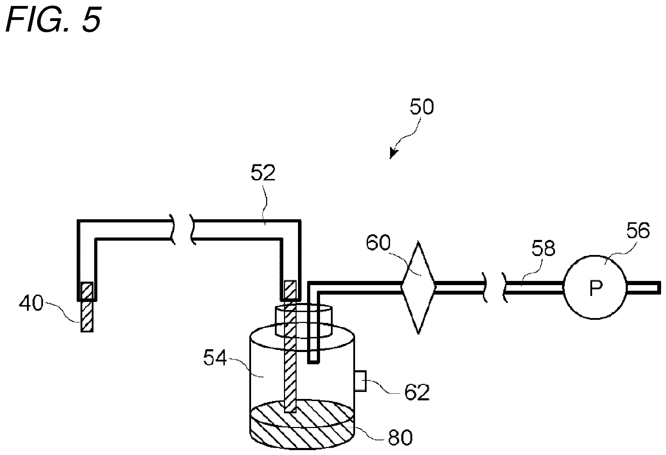

FIG. 5 is a diagram illustrating a configuration of the suction device 50. The suction device 50 includes a tube 52 connected to the suction pipe 40, a container 54 for collecting the shaping material carried thereto through the tube 52, and a suction pump 56 for sucking air from the container 54. An ink trap 60 for preventing the shaping material 80 from flowing toward a suction pump 56 side is provided on a passage 58 connecting the suction pump 56 and the container 54. Further, the container 54 is provided with a level sensor 62 for detecting an amount of the collected shaping material 80, and the shaping material 80 inside the container 54 is discarded when the amount of the shaping material 80 reaches a certain level.

### (Modified Example of First Embodiment)

Next, a three-dimensional object shaping device of a modified example of the first embodiment will be described. The three-dimensional object shaping device of the modified example of the first embodiment has the blade 36 made of resin instead of carbon tool steel. Specifically, one of high polymeric polyethylene, polyacetal, and polyethylene terephthalate is used as a material thereof. The thickness of the blade 36 is 1 mm, and a blade tip angle is 20 to 40 degrees. Other configurations are identical to the three-dimensional object shaping device 10 of the first embodiment as aforementioned. Since the resin blade 36 is soft as compared to those made of carbon tool steel, it easily complies along the surface of the flattening roller 32, and thus has superior scraping performance. Further, since it is liquid-repellent, there is an advantage that the scraped ink will not stick thereon. On the other hand, it easily deforms plastically due to its low elasticity as compared to those made of carbon tool steel, so the scraping performance is inferior in view of a long-term use. Thus, as the material of the blade 36, one that is suitable for the system should be selected by considering the scraping performance, the required liquid repellency, and the period of use.

### (Second Embodiment)

Next, a three-dimensional object shaping device of a second embodiment will be described. The basic configuration of the three-dimensional object shaping device of the second embodiment is identical to the three-dimensional object shaping device 10 of the first embodiment, however, the three-dimensional object shaping device of the second embodiment is provided with a filter at a suction inlet of the suction pipe 40.

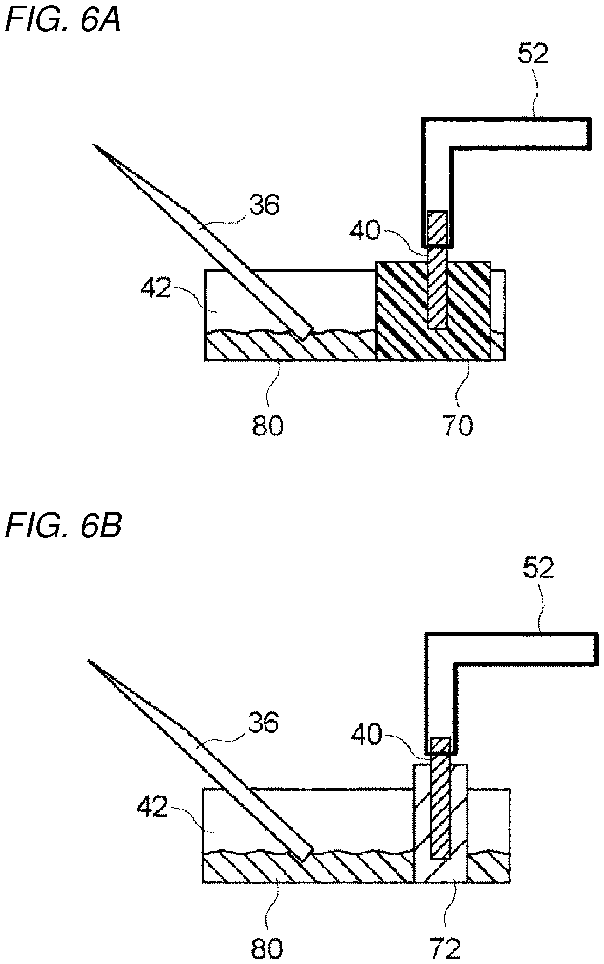

FIGS. 6A and 6B are diagrams illustrating examples of filters 70, 72 attached to the suction pipe 40. As illustrated in FIGS. 6A and 6B, the filters 70, 72 cover the suction inlet of the suction pipe 40. FIG. 6A illustrates the example of using a resin filter 70 such as fiber, continuous bubble sponge, and the like, and FIG. 6A illustrates the example of using a metal filter 72 such as stainless steel fiber and the like.

Permeability of the filters 70, 72 is at a level by which substances with particle diameters of one-tenth (1/10) or less of an inner diameter of the suction pipe 40 can permeate but substances larger than the one-tenth (1/10) size cannot permeate. In this embodiment, the inner diameter of the suction pipe 40 is 3 mm, and the filters 70, 72 have the permeability that hinders permeation of substances larger than 300µm. Due to this, cured ink particles and scraps can be prevented from entering, and the suction pipe 40 can be prevented from clogging.

### (Effects of Embodiments)

(1) The three-dimensional object shaping device 10 of the first embodiment is a device configured to shape a three-dimensional object using the layer shaping method, and is provided with: the ejection heads 28 configured to eject the shaping material; the flattening roller 32 configured to rotate and move over the shaping material 80 ejected on the layered surface to remove the extra shaping material 80; and the blade 36 configured to make contact with the flattening roller 32 along its circumferential surface to scrape off the shaping material 80 adhered to the circumferential surface by the rotation of the flattening roller 32, wherein the chrome plating is coated on the surface of the flattening roller 32, and the blade 36 is made of carbon tool steel.
   With the configuration that combines the flattening roller 32 having the chrome plating coating on its surface and the blade 36 made of carbon tool steel, the performance to scrape off the shaping material adhered to the flattening roller 32 can be increased. Further, the flattening roller 32 having the chrome plating coating has the high durability with respect to the blade 36 made of carbon tool steel, and the high scraping performance can be maintained over a long period of time.
(2) The three-dimensional object shaping device of the modified example of the first embodiment is a device configured to shape a three-dimensional object using the layer shaping method, and is provided with: the ejection heads 28 configured to eject the shaping material; the flattening roller 32 configured to rotate and move over the shaping material 80 ejected on the layered surface to remove the extra shaping material 80; and the blade 36 configured to make contact with the flattening roller 32 along its circumferential surface to scrape off the shaping material adhered to the circumferential surface by the rotation of the flattening roller 32, wherein the chrome plating is coated on the surface of the flattening roller 32, and the blade 36 is made of resin.
   With the configuration that combines the flattening roller 32 having the chrome plating coating on its surface and the blade 36 made of resin, the performance to scrape off the shaping material adhered to the flattening roller 32 can be increased. Further, the flattening roller 32 having the chrome plating coating has the high durability, and the high scraping performance can be maintained over a long period of time. Moreover, the blade 36 made of resin has the characteristic of being resistant to becoming wet by repelling off the shaping material, so the effect of allowing the shaping material to flow smoothly can be achieved.
(3) In the three-dimensional object shaping device 10 of the present embodiment, the flattening roller 32 may be made of a stainless steel base material. According to this configuration, portions that are not coated by the chrome plating are also resistant to rusting.
(4) In the three-dimensional object shaping device 10 of the present embodiment, the thickness of the chrome plating may be 20 µm to 40 µm. When the thickness of the chrome plating is thin, it is difficult to maintain the coating at the constant thickness, and when the thickness of the chrome plating is thick, the manufacturing process therefor becomes longer and the cost is incurred thereby. By setting the thickness of the chrome plating to be 20µm to 40µm, the chrome plating coating having a constant thickness can be configured with reasonable cost.
(5) In the three-dimensional object shaping device 10 of the present embodiment, the surface roughness of the chrome plating may be Ra ≤ 1 µm. According to this configuration, contact performance between the circumferential surface of the flattening roller 32 and the blade 36 becomes high, and the performance of the blade 36 to scrape off the shaping material can be increased.
(6) In the three-dimensional object shaping device 10 of the present embodiment, the width Wb of the blade 36 may be larger than the width Wr of the flattening roller 32, and the blade 36 may be configured to protrude outward from the flattening roller 32 in the direction along which the rotation shaft 34 of the flattening roller 32 extends. According to this configuration, the shaping material 80 can be prevented from easily dripping from the side surfaces of the flattening roller 32.
(7) The three-dimensional object shaping device 10 of the second embodiment may be provided with the suction pipe 40 configured to suck the shaping material 80 from the reservoir 42 for temporarily collecting the shaping material scraped off by the blade 36, and the filters 70, 72 provided at the suction inlet of the suction pipe 40. According to this configuration, the cured particles of the shaping material and the scraps can be prevented from entering the suction pipe 40, and the suction pipe 40 becomes more resistant against clogging.

The present disclosure can increase the performance to flatten the layered surfaces by removing the extra shaping material ejected from the ejection unit, and thus is useful as devices and the like for shaping a three-dimensional object using the layer shaping method.

## Claims

1. A three-dimensional object shaping device (10) configured to shape a three-dimensional object (1) using a layer shaping method, the device comprising:
an ejection head (28) configured to eject a shaping material (80);
a flattening roller (32) configured to rotate and move over the shaping material (80) ejected on a layered surface to remove an extra shaping material (80); and
a plate-shaped member (36) configured to make contact with the flattening roller (32) along a circumferential surface of the flattening roller (32) to scrape off the shaping material (80) adhered to the circumferential surface by rotation of the flattening roller (32),
2. **characterized in that**
chrome plating is coated on the surface of the flattening roller (32), and the plate-shaped member (36) is made of carbon tool steel or resin,
a blade unit is provided that comprises the plate-shaped member (36), and a reservoir (42) configured to temporarily collect the shaping material (80) scraped off by the plate-shaped member (36), and
the plate-shaped member (36) is arranged in a position with respect to the flattening roller (32) by installing the reservoir (42) of the blade unit in the device (10).

2. The three-dimensional object shaping device (10) according to claim 1, wherein the flattening roller (32) is made of a stainless steel base material.

3. The three-dimensional object shaping device (10) according to any one of claims 1 to 2 , wherein a thickness of the chrome plating is 20µm to 40µm.

4. The three-dimensional object shaping device (10) according to any one of claims 1 to 3 , wherein a surface roughness of the chrome plating is Ra ≤ 1µm.

5. The three-dimensional object shaping device (10) according to any one of claims 1 to 4 , wherein the plate-shaped member (36) is configured to protrude outward from the flattening roller (32) in a rotation axis direction of the flattening roller (32).

6. The three-dimensional object shaping device (10) according to any one of claims 1 to 5 ,the blade unit further comprising:
a suction pipe (40) configured to suck the shaping material (80) from the reservoir (42) for temporarily collecting the shaping material (80) scraped off by the plate-shaped member (36); and
a filter (70, 72) provided at a suction inlet of the suction pipe (40).

## Patentansprüche

1. Vorrichtung (10) zum Formen eines dreidimensionalen Objekts, die eingerichtet ist, um ein dreidimensionales Objekt (1) unter Verwendung eines Schichtformungsverfahrens zu formen, wobei die Vorrichtung umfasst:
einen Ausstoßkopf (28), der eingerichtet ist, um ein Formungsmaterial (80) auszustoßen;
eine Glättungswalze (32), die eingerichtet ist, um sich zu drehen und sich über das auf eine geschichtete Oberfläche ausgeworfene Formungsmaterial (80) zu bewegen, um ein zusätzliches Formungsmaterial (80) zu entfernen; und
ein plattenförmiges Element (36), das eingerichtet ist, um mit der Glättungswalze (32) entlang einer Umfangsfläche der Glättungswalze (32) einen Kontakt herzustellen, um das Formungsmaterial (80), das an der Umfangsfläche haftet, durch Drehung der Glättungswalze (32) abzuschaben,
**dadurch gekennzeichnet, dass**
eine Chromplatierung auf der Oberfläche der Glättungswalze (32) aufgebracht ist und das plattenförmige Element (36) aus Kohlenstoff-Werkzeugstahl oder Harz besteht,
eine Klingeneinheit vorgesehen ist, die das plattenförmige Element (36) und ein Reservoir (42), das eingerichtet ist, um das von dem plattenförmigen Element (36) abgeschabte Formungsmaterial (80) vorübergehend zu sammeln, umfasst, und
das plattenförmige Element (36) in einer Position in Bezug auf die Glättungswalze (32) angeordnet ist, indem das Reservoir (42) der Klingeneinheit in der Vorrichtung (10) installiert ist.

2. Vorrichtung (10) zum Formen eines dreidimensionalen Objekts nach Anspruch 1, wobei die Glättungswalze (32) aus einem Edelstahlbasismaterial besteht.

3. Vorrichtung (10) zum Formen eines dreidimensionalen Objekts nach einem der Ansprüche 1 bis 2, wobei eine Dicke der Chromplatierung 20 µm bis 40 µm beträgt.

4. Vorrichtung (10) zum Formen eines dreidimensionalen Objekts nach einem der Ansprüche 1 bis 3, wobei eine Oberflächenrauheit der Chromplatierung Ra ≤ 1 µm beträgt.

5. Vorrichtung (10) zum Formen eines dreidimensionalen Objekts nach einem der Ansprüche 1 bis 4, wobei das plattenförmige Element (36) eingerichtet ist, um von der Glättungswalze (32) in einer Drehachsenrichtung der Glättungswalze (32) nach außen hervorzustehen.

6. Vorrichtung (10) zum Formen eines dreidimensionalen Objekts nach einem der Ansprüche 1 bis 5, wobei die Klingeneinheit weiterhin umfasst:
ein Saugrohr (40), das eingerichtet ist, um das Formungsmaterial (80) aus dem Reservoir (42) anzusaugen, um das von dem plattenförmigen Element (36) abgeschabte Formungsmaterial (80) vorübergehend zu sammeln; und
einen Filter (70, 72), der an einem Ansaugeinlass des Saugrohrs (40) vorgesehen ist.

## Revendications

1. Dispositif de mise en forme d'objet tridimensionnel (10) configuré pour mettre en forme un objet tridimensionnel (1) à l'aide d'un procédé de mise en forme par couches, le dispositif comprenant :
une tête d'éjection (28) configurée pour éjecter un matériau de mise en forme (80) ;
un rouleau d'aplatissement (32) configuré pour tourner et se déplacer sur le matériau de mise en forme (80) éjecté sur une surface en couches pour retirer un matériau de mise en forme excédentaire (80) ; et
un élément en forme de plaque (36) configuré pour entrer en contact avec le rouleau d'aplatissement (32) le long d'une surface circonférentielle du rouleau d'aplatissement (32) pour retirer par raclage le matériau de mise en forme (80) adhérant à la surface circonférentielle par rotation du rouleau d'aplatissement (32),
**caractérisé en ce que**
un revêtement de chrome est appliqué sur la surface du rouleau d'aplatissement (32), et l'élément en forme de plaque (36) est fait d'acier à outils au carbone ou de résine,
une unité de lame est prévue laquelle comprend l'élément en forme de plaque (36), et un réservoir (42) configuré pour recueillir temporairement le matériau de mise en forme (80) retiré par raclage par l'élément en forme de plaque (36), et
l'élément en forme de plaque (36) est agencé dans une position par rapport au rouleau d'aplatissement (32) en installant le réservoir (42) de l'unité de lame dans le dispositif (10).

2. Dispositif de mise en forme d'objet tridimensionnel (10) selon la revendication 1, dans lequel le rouleau d'aplatissement (32) est fait d'un matériau de base en acier inoxydable.

3. Dispositif de mise en forme d'objet tridimensionnel (10) selon l'une quelconque des revendications 1 à 2, dans lequel une épaisseur du placage de chrome est de 20 µm à 40 µm.

4. Dispositif de mise en forme d'objet tridimensionnel (10) selon l'une quelconque des revendications 1 à 3, dans lequel une rugosité de surface du placage au chrome est Ra ≤ 1 µm.

5. Dispositif de mise en forme d'objet tridimensionnel (10) selon l'une quelconque des revendications 1 à 4, dans lequel l'élément en forme de plaque (36) est configuré pour faire saillie vers l'extérieur depuis le rouleau d'aplatissement (32) dans une direction d'axe de rotation du rouleau d'aplatissement (32).

6. Dispositif de mise en forme d'objet tridimensionnel (10) selon l'une quelconque des revendications 1 à 5, l'unité de lame comprenant en outre :
un tuyau d'aspiration (40) configuré pour aspirer le matériau de mise en forme (80) à partir du réservoir (42) pour recueillir temporairement le matériau de mise en forme (80) retiré par raclage par l'élément en forme de plaque (36) ; et
un filtre (70, 72) prévu à une entrée d'aspiration du tuyau d'aspiration (40).
